# EUROPEAN PATENT APPLICATION

(11) **EP 4 751 906 A1**
(43) Date of publication of application: **03.06.2026**
(21) Application number: 24818824.5
(22) Date of filing: 19.06.2024
(51) Int. Cl.: B32B 15/04, B32B 33/00, B32B 3/12, B21J 5/02, B22F 10/28, B22F 5/00, B22F 10/36, B22F 10/368, B33Y 10/00, B33Y 80/00

(54) **THERMAL INSULATION PLATE FOR VACUUM ISOTHERMAL FORGING, THERMAL INSULATION DEVICE, PREPARATION METHOD, AND APPLICATION**

(30) Priority: 06.06.2023 CN 202310663405
(71) Applicant: China Academy of Machinery Beijing Research Institute of Mechanical & Electrical Technology Co., Ltd., Beijing 100083 (CN)
(72) Inventor: ZHAI, Yuewen, Beijing 100083 (CN); HE, Xiaomao, Beijing 100083 (CN); JIANG, Chao, Beijing 100083 (CN); HUANG, Xina, Beijing 100083 (CN)
(74) Representative: Stork Bamberger Patentanwälte PartmbB
(86) International application number: PCT/CN2024/100186
(87) International publication number: WO 2024/251299

(57) **Abstract**

The disclosure relates to the field of mechanical manufacturing, and particularly provides a preparation method and an application of a thermal insulation plate and a thermal insulation device for vacuum isothermal forging. The structure of the thermal insulation plate comprises two panels and a heterogeneous middle core layer arranged between the two panels; the heterogeneous middle core layer is a lattice structure composed of unit cells; the thermal insulation plate is made of metal with a high-temperature resistant and a low thermal conductivity. By means of material selection and structural adjustment of the heterogeneous intermediate core layer, the thermal insulation plate can meet different heat preservation requirements, gradient temperature drop in vacuum isothermal forging, and different compressive property requirement.

## Description

The present disclosure claims the priority of the Chinese Patent application filed with the China National Intellectual Property Administration on June 6, 2023, with the application number 202310663405.2 and the application title "Thermal insulation Plate and Thermal insulation Device for Vacuum Isothermal Forging, the Preparation Method and Application of the same".

### Technical Field

The disclosure relates to the field of mechanical manufacturing, and specifically provides a thermal insulation plate and a thermal insulation device for vacuum isothermal forging, as well as a preparation method and application thereof.

### Background

With the increasing application demand for difficult-to-forge metals such as titanium alloys, magnesium alloys, and superalloys, the emergence of the vacuum isothermal forging process has become an effective method to solve the forging problem of large structural components made of these difficult-to-forge metals-thus placing higher requirements on the vacuum isothermal forging process. Taking superalloys as an example, in the superalloy forging and forming process, the temperature is required to be controlled above 800°C, which requires reducing temperature loss during the mold forming process to effectively improve the mechanical properties, physical properties, and yield of the formed products. The thermal insulation plate of the vacuum isothermal forging press plays a key role in thermal insulation and thermal retention. Meanwhile, the thermal insulation plate is further required to withstand a certain amount of pressure while achieving thermal insulation and heat preservation.

During the vacuum isothermal forging of superalloys, the molds used are mainly multi-layer molds. A gradient temperature drop between the multi-layer molds is often controlled, and the temperature at the position in contact with the press is generally reduced to below 200°C. However, it is difficult to achieve gradient heat preservation between multi-layer molds with traditional hot forging thermal insulation plates, such as epoxy resin plates or high-temperature-resistant plastic mica powder plates, resulting in the temperature of other mold layers being lower than the required temperature and thus affecting the forming quality of the final product. To address the above issues, it is necessary to propose a design and preparation method for a thermal insulation plate for vacuum isothermal forging.

In view of this, the present disclosure is hereby proposed.

### Summary

A first object of the present disclosure is to provide a thermal insulation plate for vacuum isothermal forging.

A second object of the present disclosure is to provide a preparation method for the thermal insulation plate.

A third object of the present disclosure is to provide a thermal insulation device comprising the thermal insulation plates.

A fourth object of the present disclosure is to provide a preparation method for the thermal insulation device.

In order to achieve the above objects, the present disclosure provides the following technical solutions.

The present disclosure provides a thermal insulation plate for vacuum isothermal forging, the structure of which comprises two panels and a heterogeneous middle core layer disposed between the two panels; the heterogeneous middle core layer is a lattice structure and composed of unit cells;
the thermal insulation plate is fabricated using a metal that is high-temperature resistant and has low thermal conductivity.

In addition, the unit cell topologies include simple cubic unit cell, body-centered cubic unit cell, face-centered cubic unit cell, regular octahedral unit cell, regular dodecahedral unit cell, diamond-structured unit cell, and helical icositetrahedron unit cell.

In addition, material of the thermal insulation plate is superalloys.

In addition, the lattice structure has a strut size of 0.5~5mm.

Preferably, each of the upper and lower panels for the thermal insulation plate has a thickness of 10~30mm independently.

Preferably, the thermal insulation plate has a diameter of φ500-800 mm and a thickness of 20-50 mm.

The present disclosure further provides a preparation method of the aforementioned thermal insulation plate, which adopts a laser additive manufacturing with synergistic temperature field effect to prepare the thermal insulation plate;
the preparation process parameters include a synergistic temperature of 400-800°C, a laser power of 1600-2000 W, a scanning speed of 10-14 mm/s, and a powder feeding rate of 5-10 g/min.

A preparation method of a thermal insulation plate for vacuum isothermal forging is provided, wherein the structure of the thermal insulation plate comprises two panels and a heterogeneous middle core layer disposed between the two panels; the heterogeneous middle core layer is a lattice structure composed of unit cells; the preparation method comprises the following steps.

In a step of S1, superalloys are selected as the material of the thermal insulation plate.

In a step of S2, 2-3 unit cell topologies are designed as the structure of the middle core layer.

In a step of S3, compressive properties of different unit cell topologies in step S2 are analyzed by means of theoretical calculation and finite element method.

In a step of S4, thermal conductivity coefficients of the lattice structures with different unit cell topologies in the vertical direction are analyzed based on the NIAH method, determining the unit cell topologies of the thermal insulation plates by combining the thermal conductivity coefficient analysis with the compressive property analysis in step S2; strut sizes of the lattice structures for the middle core layers of the thermal insulation plates are determined;
the optimization objectives include minimization of thermal conductivity coefficient and/or maximization of bulk modulus.

In a step of S5, panels are designed on the upper and lower surfaces of the lattice structure for the middle core layers, and the thickness of the upper and lower panels is determined.

In a step of S6, overall structures and outline dimensions of the thermal insulation plates are determined according to steps S1-S5.

In a step of S7, the thermal insulation plate model is drawn according to the above design parameters, the thermal insulation plate is prepared using laser additive manufacturing with synergistic temperature field effect, and experimental verification of the compressive property and thermal conductivity on the formed thermal insulation plate is conduct respectively.

The present disclosure further provides a thermal insulation device for vacuum isothermal forging, wherein the thermal insulation device comprises an upper portion and a lower portion; each of the upper portion and the lower portion independently contains at least one aforementioned thermal insulation plate; a metal piece to be forged is placed between the upper portion and the lower portion.

In addition , the temperature of the vacuum isothermal forging is 500-1200°C.

Preferably, each of the upper portion and the lower portion independently includes at least two thermal insulation plates, and a pad is disposed between the thermal insulation plates.

The present disclosure further provides a preparation method of the aforementioned thermal insulation device, wherein the preparation method includes the following steps:
S1: setting number of upper and lower thermal insulation plates and metal materials of the thermal insulation plates at different positions independently according to operating temperature and heat preservation requirements of the thermal insulation device;
S2: designing 2-3 unit cell topologies for each type of the thermal insulation plates in step S1;
S3: analyzing compressive properties of different unit cell topologies in step S2 based on theoretical calculation and finite element method;
S4: analyzing thermal conductivity coefficients of the lattice structures with different unit cell topologies in the vertical direction based on the NIAH method, determining the unit cell topologies of the thermal insulation plates by combining the thermal conductivity coefficient analysis with the compressive property analysis in step S2; determining strut sizes of the lattice structures for the middle core layers of the thermal insulation plates;
wherein the optimization objectives include minimization of thermal conductivity coefficient and/or maximization of bulk modulus;
S5: designing panels on the upper and lower surfaces of the lattice structure for the middle core layer, and determining the thickness of the upper and lower panels;
S6: determining overall structures and outline dimensions of the thermal insulation plates according to steps S1-S5;
S7: **constructing** thermal insulation plate models according to the above design parameters, preparing the thermal insulation plate using laser additive manufacturing with synergistic temperature field effect, and conducting experimental verification of the compressive property and thermal conductivity on the formed thermal insulation plate respectively;
S8: assembling all thermal insulation plates with pads to obtain the thermal insulation device, where each of the pads is disposed between two thermal insulation plates.

In addition, the metal materials in step S1 have high temperature resistance and low thermal conductivity and preferably are superalloys.

Preferably, the unit cell topologies in step S2 include body-centered cubic unit cell, regular octahedral unit cell, and regular dodecahedral unit cell.

Preferably, the compressive properties of the three different unit cell topologies follow an order of regular octahedral unit cell > regular dodecahedral unit cell > body-centered cubic unit cell.

Preferably, the finite element method in step S3 is performed by Commercial Abaqus finite element software.

Preferably, the lattice structure of the middle core layer in step S4 has a strut size of 1.5~2mm.

Preferably, the thickness of upper and lower panels of the sandwich structure of each of the thermal insulation plate in step S5 is in a range of 10~30mm.

Preferably, the overall structure of each of the thermal insulation plate in step 6 has an outer outline diameter of Φ500~800mm and a thickness of 20~50mm.

Preferably, in step 7, a synergistic temperature is 400-800°C, a laser power is 1600-2000 W, a scanning speed is 10-14 mm/s, and a powder feeding rate is 5-10 g/min.

The present disclosure provides an application of the aforementioned thermal insulation plate or the thermal insulation device in a vacuum isothermal forging press.

The present disclosure has the following technical effects compared with the prior art.

The thermal insulation plates and thermal insulation device of the present disclosure realize the thermal insulation and heat preservation effect on molds in vacuum isothermal forging; achieve gradient temperature drop between multi-layer molds in vacuum isothermal forging; and ensure the pressure-bearing capacity of the thermal insulation plates. By optimizing the structural design of the thermal insulation plate and using additive manufacturing technology, the present disclosure prepares a protective mold that meets the requirements for vacuum isothermal forging of high-temperature alloys. In this way, it prevents complete heat loss, achieves a gradient temperature drop between multi-layer molds, and enables the protective mold to withstand a certain level of pressure.
1. The thermal insulation device is split and arranged into a multi-stage block structure (multi-layer thermal insulation plates). The thermal insulation plates on the load-bearing surfaces adopt unit cell topologies with good compressive property, while the thermal insulation plates on the non-load-bearing surfaces adopt unit cell topologies with good thermal insulation capacity. In this way, it not only ensures the stability of vacuum isothermal forging forming, but also effectively reduces heat transfer of the mold, guarantees product quality, ensures good forming quality of workpieces, and prolongs the service life of the device.
2. High-temperature alloy material is selected for the thermal insulation plates, which avoids the damage of traditional thermal insulation materials in actual production due to severe local pressure, and reduces the replacement frequency of the thermal insulation plates.
3. The additive manufacturing process under the synergistic effect of temperature field is used to prepare the high-temperature alloy thermal insulation plates. The synergistic effect of the temperature field avoids cracking of high-temperature alloys during conventional additive manufacturing, and can effectively improve the comprehensive performance of the additively manufactured superalloy thermal insulation plates.
4. The thermal conductivity coefficient of the superalloy is 6.5 W/(m·K); the thermal conductivity coefficient of the sandwich-structured thermal insulation plate for vacuum isothermal forging prepared by the present disclosure is less than 0.5 W/(m·K), and its compressive strength is higher than 600 MPa.

### Brief Description of the Drawing

The following further describes technical features of the present disclosure and the relationships among them with reference to the accompanying drawings. The accompanying drawings are exemplary. Some technical features are not shown in actual scale. And in some drawings, technical features that are conventional in the technical field to which the present disclosure belongs and are not essential for understanding and implementing the present disclosure may be omitted, or technical features that are not essential for understanding and implementing the present disclosure may be additionally shown. That is to say, the combination of the various technical features shown in the accompanying drawings is not intended to limit the present disclosure. In addition, the same reference numerals refer to the same technical features hereby. The specific description of the accompanying drawings is as follows.
FIG.1 is a distribution diagram of a multi-layer mold, its upper and lower thermal insulation plates, pads and backing plates adopted in a vacuum isothermal forging preparation process in an Embodiment 1.
FIG.2 illustrates three unit-cell topologies adopted in the Embodiment 1.
FIG.3 illustrates dimensional parameters of the unit-cell topology in the Embodiment 1.
FIG.4 is a schematic diagram of a front view of a thermal insulation plate in the Embodiment 1.
FIG. 5 is a schematic diagram of a sandwich structure of the thermal insulation plate in the Embodiment 1.

### Detailed Description

Hereinafter, embodiments of the present disclosure will be described in detail.

Term "vacuum isothermal forging" refers to a forming process in which a blank is subjected to isothermal forging in a vacuum environment to obtain the desired shape and properties. It is characterized in that the entire process of the blank from heating to forging is carried out in a sealed vacuum chamber, and the temperatures of the blank and the mold are kept the same during forging, which can effectively control the surface quality, internal structure and oxide content of the forgings.

Term "heterogeneous" refers to a state where the lattice structure of the middle core layer is non-uniform, with density differences of unit cells, structural differences, and the like.

Term "lattice structure" refers to a structure composed of identical unit cells that are periodically and regularly arranged in space.

Term "unit cell" refers to the most basic geometric unit that constitutes the lattice structure.

Term "superalloy" refers to a type of metallic material based on iron, nickel, and cobalt, which can serve for long periods at high temperatures above 600°C under a certain level of stress. It possesses excellent high-temperature strength, great oxidation resistance and hot corrosion resistance, as well as great fatigue performance, fracture toughness, and other comprehensive properties.

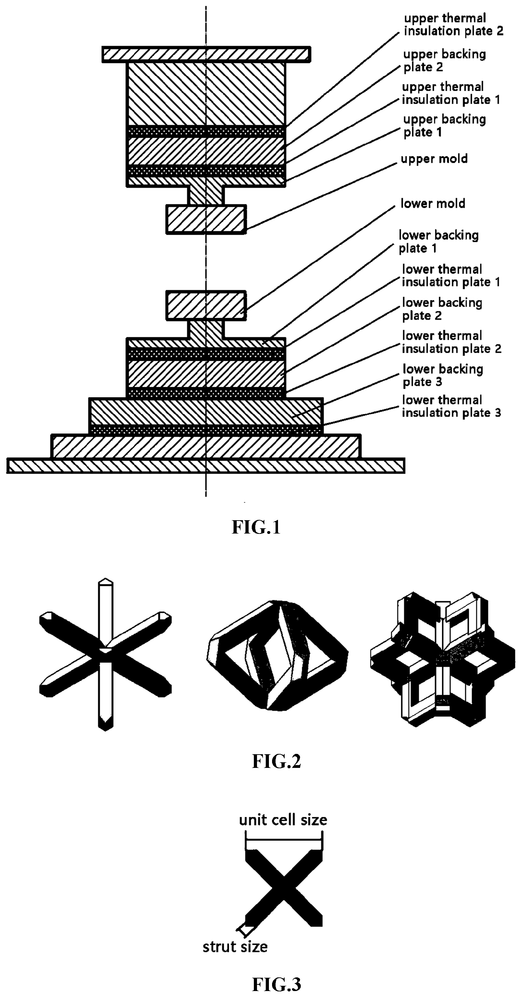

Term "strut size of lattice structure " refers to a side length of the square cross-section of the struts composing the unit cell, as specifically shown in FIG.3.

Commercial Abaqus FEA software is a software that decomposes a solution domain into numerous elements called finite elements, assumes an appropriate approximate solution for each element, and then derives and solves the overall satisfaction conditions for this domain to obtain the solution to the problem.

In one aspect, the present disclosure provides a thermal insulation plate for vacuum isothermal forging, the structure of which comprises two panels and a heterogeneous middle core layer disposed between the two panels; the heterogeneous middle core layer is a lattice structure and composed of unit cells; the thermal insulation plate is fabricated using a metal that is high-temperature resistant and has low thermal conductivity.

In the present disclosure, the thermal insulation plate is designed as a heterogeneous sandwich structure, which includes upper and lower panels and a hollow lattice structure of the middle core layer. This thermal insulation plate can achieve minimization of thermal conductivity while withstanding a certain level of pressure.

In a preferred embodiment, the unit cells may be simple cubic unit cell, body-centered cubic unit cell, face-centered cubic unit cell, regular octahedral unit cell, regular dodecahedral unit cell, diamond-structured unit cell, helical icositetrahedron unit cell, and the like. The "heterogeneity" of the middle core layer of the thermal insulation plate refers to that the unit cells of the middle core layer have the same topology but strut sizes of the lattice structure are different; for example, the strut size of the lattice structure at the edge of the middle core layer is 1.5 mm, and that at the middle part is 2 mm, resulting in different porosities at different parts of the middle core layer.

In a preferred embodiment, material of the thermal insulation plate is superalloys. The two panels and the middle core layer of the thermal insulation plate are all made of the same superalloy, for example: GH3034, GH4169, Inconel718, and the like.

In a preferred embodiment, the strut size of the lattice structure is 0.5-5 mm, and may be, but is not limited to, 0.5 mm, 0.7 mm, 1 mm, 1.3 mm, 1.5 mm, 1.7 mm, 2 mm, 2.3 mm, 2.5 mm, 2.7 mm, 3 mm, 3.3 mm, 3.5 mm, 3.7 mm, 4 mm, 4.3 mm, 4.5 mm, 4.7 mm, or 5 mm.

In a preferred embodiment, the thickness of each of the upper and lower layers for panels of the thermal insulation plate is independently 10-30 mm, and may be, but is not limited to, 10 mm, 15 mm, 20 mm, 25 mm, or 30 mm.

In a preferred embodiment, the thermal insulation plate has a diameter of φ500-800 mm, which may be, but is not limited to, φ500 mm, φ550 mm, φ600 mm, φ650 mm, φ700 mm, φ750 mm, or φ800 mm; and has a thickness of 20-50 mm, which may be, but is not limited to, 20 mm, 25 mm, 30 mm, 35 mm, 40 mm, 45 mm, or 50 mm.

In one aspect, the present disclosure provides a preparation method of the aforementioned thermal insulation plate, which adopts additive manufacturing method with synergistic temperature field effect to prepare the thermal insulation plate, the preparation process parameters include a synergistic temperature of 400-800°C, a laser power of 1600-2000 W, a scanning speed of 10-14 mm/s, and a powder feeding rate of 5-10 g/min. Specifically, the synergistic temperature may be, but is not limited to, 400°C, 450°C, 500°C, 550°C, 600°C, 650°C, 700°C, 750°C, or 800°C; the laser power may be, but is not limited to, 1600 W, 1650 W, 1700 W, 1750 W, 1800 W, 1850 W, 1900 W, 1950 W, or 2000 W; the scanning speed may be, but is not limited to, 10 mm/s, 11 mm/s, 12 mm/s, 13 mm/s, or 14 mm/s; the powder feeding rate may be, but is not limited to, 5 g/min, 6 g/min, 7 g/min, 8 g/min, 9 g/min, or 10 g/min.

In one aspect, the present disclosure provides a preparation method of a thermal insulation plate for vacuum isothermal forging, wherein the structure of the thermal insulation plate comprises two panels and a heterogeneous middle core layer disposed between the two panels; the heterogeneous middle core layer is a lattice structure and composed of unit cells; the preparation method comprises the following steps:
S1: selecting a superalloy as the material of the thermal insulation plate;
S2: designing 2-3 unit cell topologies as the structure of the middle core layer;
S3: analyzing compressive properties of different unit cell topologies in step S2 by means of theoretical calculation and finite element method;
S4: analyzing thermal conductivity coefficients of the lattice structures with different unit cell topologies in the vertical direction based on the NIAH method, determining the unit cell topologies of the thermal insulation plate by combining the thermal conductivity coefficient analysis with the compressive property analysis in step S2; determining strut sizes of the lattice structures of the middle core layer of the thermal insulation plate by taking strut sizes of the lattice structures for the middle core layers of the thermal insulation plate as a design variable;
wherein the optimization objectives include minimization of thermal conductivity coefficient and/or maximization of bulk modulus;
S5: panels are designed on the upper and lower surfaces of the lattice structure for the middle core layers, and the thickness of the upper and lower panels is determined;
S6: determining an overall structure and outline dimensions of the thermal insulation plate according to steps S1-S5;
S7: drawing a thermal insulation plate model according to the above design parameters, preparing the thermal insulation plat using laser additive manufacturing with synergistic temperature field effect, and conducting experimental verification of the compressive property and thermal conductivity on the formed thermal insulation plate respectively.

In one aspect, the present disclosure provides thermal insulation device for vacuum isothermal forging, wherein the thermal insulation device comprises an upper portion and a lower portion; each of the upper portion and the lower portion independently contains at least one thermal insulation plate according to the present disclosure; a metal piece to be forged is placed between the upper portion and the lower portion.

In some embodiments, the thermal insulation device of the present disclosure is suitable for vacuum isothermal forging with a temperature range of 500~1200°C.

It should be noted that the suitable metal material of the thermal insulation plate is selected based on the thermal insulation requirements of the thermal insulation device in the vacuum isothermal forging process, the structure of the thermal insulation plate is selected based on the bearing pressure, and the number of thermal insulation plates is selected considering the comprehensive performance. Both the upper portion and the lower portion may independently contain 1, 2, 3, 4 or more thermal insulation plates. The material and intermediate core layer structure of each thermal insulation plate may be the same or different. For example, the thermal insulation plates on the load-bearing surfaces adopt unit cell topologies with better compressive property, while the thermal insulation plates on the non- load-bearing surfaces adopt unit cell topologies with better thermal insulation performance. When at least two thermal insulation plates are contained in the upper or lower portion, superalloy pads are preferably disposed between the thermal insulation plates. These pads can serve to support and bear pressure, thereby enhancing the compressive property of the thermal insulation device.

The present disclosure further provides a preparation method of the aforementioned thermal insulation device, wherein the preparation method includes the following steps:
S1: setting number of upper and lower thermal insulation plates and metal materials of the thermal insulation plates at different positions independently according to operating temperature and heat preservation requirements of the thermal insulation device;
S2: designing 2-3 unit cell topologies for each type of the thermal insulation plates in step S1;
S3: analyzing compressive properties of different unit cell topologies in step S2 based on theoretical calculation and finite element method;
S4: analyzing thermal conductivity coefficients of the lattice structures with different unit cell topologies in the vertical direction based on the NIAH method, determining the unit cell topologies of the thermal insulation plates at different positions by combining the thermal conductivity coefficient analysis with the compressive property analysis in step S2; determining strut sizes of the lattice structures for the middle core layers of the thermal insulation plates;
wherein the optimization objectives include minimization of thermal conductivity coefficient and/or maximization of bulk modulus;
S5: designing panels on the upper and lower surfaces of the lattice structure for the middle core layer, and determining the thickness of the upper and lower panels;
S6: determining overall structures and outline dimensions of the thermal insulation plates according to steps S1-S5;
S7: constructing thermal insulation plate models according to the above design parameters, preparing the thermal insulation plates using laser additive manufacturing with synergistic temperature field effect, and conducting experimental verification of the compressive property and thermal conductivity on the formed thermal insulation plate respectively;
S8: assembling all thermal insulation plates with pads to obtain the thermal insulation device, where each of the pads is disposed between two thermal insulation plates.

The thermal insulation plate of the present disclosure is prepared from high-temperature alloy material by the additive manufacturing method. The method of the present disclosure includes the following steps: structural design of the stress-bearing part of the thermal insulation plate, structural design of the non-stress-bearing part of the thermal insulation plate, overall structural design of the thermal insulation plate, material selection of the thermal insulation plate, and additive manufacturing of the thermal insulation plate. It also proposes an optimized design method for the overall structure and additive manufacturing of the thermal insulation plate with a heterogeneous sandwich structure, so as to obtain an integral thermal insulation device. The present disclosure from the perspective of passive thermal protection proposes a method of structural optimization design to achieve the purpose of thermal insulation; and through the design and optimization of the structure of the thermal insulation device, it ensures compressive property of the thermal insulation device while achieving thermal insulation.

In some preferred embodiments, the metal materials in step S1 have high temperature resistance and low thermal conductivity and preferably are superalloys.

In some preferred embodiments, the unit cell topologies in step S2 include body-centered cubic unit cell, regular octahedral unit cell, and regular dodecahedral unit cell. Wherein, the compressive properties of the three different unit cell topologies follow an order of regular octahedral unit cell > regular dodecahedral unit cell > body-centered cubic unit cell.

In some preferred embodiments, the lattice structure in step S4 has a strut size of 0.5~5mm.

In some preferred embodiments, the thickness of upper and lower panels of the sandwich structure of each of the thermal insulation plate is in a range of 10~30mm.

In some preferred embodiments, the overall structure of each of the thermal insulation plate in step 6 has an outer outline diameter of φ500~800mm and a thickness of 20~50mm.

In some preferred embodiments, in step 7, a synergistic temperature is 400-800°C, a laser power is 1600-2000 W, a scanning speed is 10-14 mm/s, and a powder feeding rate is 5-10 g/min.

The present disclosure further provides an application of the aforementioned thermal insulation plate or thermal insulation device in vacuum isothermal forging presses. The thermal insulation plate or thermal insulation device of the present disclosure can be applied in the multi-layer molds of vacuum isothermal forging. According to their preparation process, desire thermal insulation devices and thermal insulation plates can be designed and obtained, thus achieving good application of vacuum isothermal forging.

The present disclosure will be further described below with reference to specific examples, and the advantages and features of the present disclosure will become more apparent in the description. However, these examples are merely exemplary and do not impose any limitation on the scope of the present disclosure. Those skilled in the art should understand that the details and forms of the technical solution of the present disclosure may be modified or replaced without departing from the spirit and scope of the present disclosure, and all such modifications and replacements fall within the protection scope of the present disclosure.

### Example 1

As shown in FIG. 1, the present disclosure provides a technical solution.

The present disclosure provides a preparation method of a thermal insulation plate for vacuum isothermal forging, specifically comprising the following steps.

In a step of S1, as shown in FIG. 1, number and material of upper and lower thermal insulation plates are designed according to service requirements of a thermal insulation device. The function of the thermal insulation plates is to control the gradient temperature drop between the multi-layer molds, where the first layer of thermal insulation plate controls the temperature within the range of 1200°C to 800°C, and the second layer of thermal insulation plate controls the temperature within 800°C to 400°C. At the position in contact with a press, the temperature generally is reduced to below 200°C. The material of the thermal insulation plates is superalloy.

In a step of S2, 2-3 unit cell topologies are designed for each type of the thermal insulation plates in step S1, as shown in FIG.2.

In a step of S3, compressive properties of different unit cell topologies in step S2 are analyzed based on theoretical calculation and finite element method, wherein the compressive properties of the three different unit cell topologies follow an order of regular octahedral unit cell > regular dodecahedral unit cell > body-centered cubic unit cell.

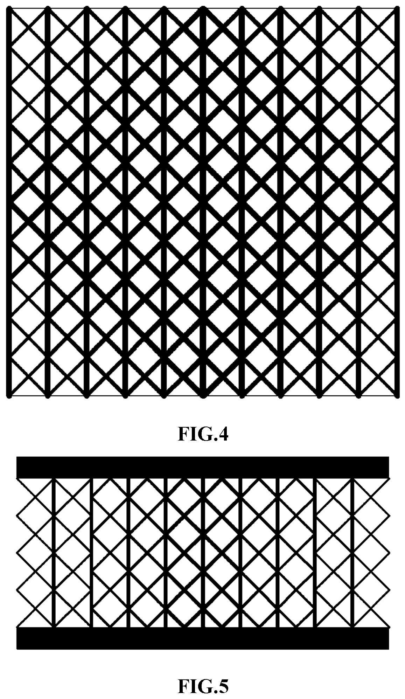

In a step of S4, thermal conductivity coefficients of the lattice structures with different unit cell topologies in the vertical direction are analyzed based on the NIAH method, the unit cell topology of the thermal insulation plate at different positions is determined by combining the thermal conductivity coefficient analysis with the compressive property analysis in step S2; strut sizes of the lattice structures for the middle core layers of the thermal insulation plates is determined , as shown in FIG.4. The strut size of the lattice structure of the middle core layer is in a range of 1.5~2 mm.

In a step of S5, panels are designed on the upper and lower surfaces of the lattice structure for each of the middle core layers, and the thickness of the upper and lower panels is determined, as shown in FIG.5. The thickness of upper and lower panels of the sandwich structure is in a range of 10~30 mm.

In a step of S6, overall structures and outline dimensions of the thermal insulation plates are determined according to steps S1-S5. The overall structure of each of the thermal insulation plate has an outer outline diameter of φ500∼800mm and a thickness of 20~50 mm.

In a step of S7, thermal insulation plate models are drawn according to the above design parameters, the thermal insulation plates are prepared using laser additive manufacturing with synergistic temperature field effect, and conducting experimental verification of the compressive property and thermal conductivity on the formed thermal insulation plate respectively. Wherein a synergistic temperature is 400-800°C, a laser power is 1600-2000 W, a scanning speed is 10-14 mm/s, and a powder feeding rate is 5-10 g/min.

The obtained thermal insulation device is as shown in FIG. 1; the three unit cell topologies adopted are as shown in FIG. 2; the schematic diagram of the front view of the thermal insulation plate is as shown in FIG. 4; and the schematic diagram of the sandwich structure of the thermal insulation plate is as shown in FIG. 5.

It should be noted that the above are only the preferred embodiments of the present disclosure and the technical principles employed therein. Those skilled in the art will appreciate that the present disclosure is not limited to the specific embodiments described herein, and various obvious modifications, readjustments and substitutions can be made by those skilled in the art without departing from the protection scope of the present disclosure. Therefore, although the present disclosure has been described in relatively detail through the above embodiments, the present disclosure is not limited to the above embodiments alone; without departing from the technical concept of the present disclosure, it can also include more other equivalent embodiments, all of which fall within the protection scope of the present disclosure.

## Claims

1. A thermal insulation plate for vacuum isothermal forging, the structure of which comprising two panels and a heterogeneous middle core layer disposed between the two panels; the heterogeneous middle core layer is a lattice structure composed of unit cells;
the thermal insulation plate is fabricated using a metal that has a high-temperature resistant and a low thermal conductivity.

2. The thermal insulation plate of claim 1, wherein
the unit cell topologies are simple cubic unit cell, body-centered cubic unit cell, face-centered cubic unit cell, regular octahedral unit cell, regular dodecahedral unit cell, diamond-structured unit cell, or helical icositetrahedron unit cell.

3. The thermal insulation plate of claim 1, wherein
material of the thermal insulation plate is superalloys;
the lattice structure has a strut size of 0.5~5mm;
each of the upper and lower panels for the thermal insulation plate has a thickness of 10~30mm independently;
the thermal insulation plate has a diameter of Φ500-800 mm and a thickness of 20-50 mm.

4. A preparation method of the thermal insulation plate of any one of claims 1~3 adopting a laser additive manufacturing with synergistic temperature field effect to prepare the thermal insulation plate;
the preparation process parameters include a synergistic temperature of 400-800°C, a laser power of 1600-2000 W, a scanning speed of 10-14 mm/s, and a powder feeding rate of 5-10 g/min.

5. A preparation method of a thermal insulation plate for vacuum isothermal forging, wherein the structure of the thermal insulation plate comprises two panels and a heterogeneous middle core layer disposed between the two panels; the heterogeneous middle core layer is a lattice structure and composed of unit cells; the preparation method comprises the following steps:
S1: selecting a superalloy as the material of the thermal insulation plate;
S2: designing 2-3 unit cell topologies for each type of the thermal insulation plates in step S1;
S3: analyzing compressive properties of different unit cell topologies in step S2 based on theoretical calculation and finite element method;
S4: analyzing thermal conductivity coefficients of the lattice structures with different unit cell topologies in the vertical direction based on the NIAH method, determining the unit cell topologies of the thermal insulation plates by combining the thermal conductivity coefficient analysis with the compressive property analysis in step S2; determining strut sizes of the lattice structures for the middle core layers of the thermal insulation plates;
wherein the optimization objectives include minimization of thermal conductivity coefficient and/or maximization of bulk modulus;
S5: designing panels on the upper and lower surfaces of the lattice structure for the middle core layer, and determining the thickness of the upper and lower panels;
S6: determining overall structures and outline dimensions of the thermal insulation plates according to steps S1-S5;
S7: constructing thermal insulation plate models according to the above design parameters, preparing the thermal insulation plates using laser additive manufacturing with synergistic temperature field effect, and conducting experimental verification of the compressive property and thermal conductivity on the formed thermal insulation plate respectively.

6. A thermal insulation device for vacuum isothermal forging, wherein the thermal insulation device comprises an upper portion and a lower portion; each of the upper portion and the lower portion independently contains at least one thermal insulation plate according to any one of claims 1-4; a metal piece to be forged is placed between the upper portion and the lower portion.

7. The thermal insulation device of claim 6, wherein the temperature of the vacuum isothermal forging is 500-1200°C;
each of the upper portion and the lower portion independently includes at least two thermal insulation plates, and a pad is disposed between the thermal insulation plates.

8. A preparation method of the thermal insulation device of claim 6 or 7 comprising the following steps:
S1: setting the number of upper and lower thermal insulation plates and metal materials of the thermal insulation plates at different positions independently according to operating temperature and heat preservation requirements of the thermal insulation device;
S2: designing 2-3 unit cell topologies for each type of the thermal insulation plates in step S1;
S3: analyzing compressive properties of different unit cell topologies in step S2 based on theoretical calculation and finite element method;
S4: analyzing thermal conductivity coefficients of the lattice structures with different unit cell topologies in the vertical direction based on the NIAH method, determining the unit cell topologies of the thermal insulation plates by combining the thermal conductivity coefficient analysis with the compressive property analysis in step S2; determining strut sizes of the lattice structures for the middle core layers of the thermal insulation plates;
wherein the optimization objectives include minimization of thermal conductivity coefficient and/or maximization of bulk modulus;
S5: designing panels on the upper and lower surfaces of the lattice structure for the middle core layer, and determining the thickness of the upper and lower panels;
S6: determining overall structures and outline dimensions of the thermal insulation plates according to steps S1-S5;
S7: constructing thermal insulation plate models according to the above design parameters, preparing the thermal insulation plates using laser additive manufacturing with synergistic temperature field effect, and conducting experimental verification of the compressive property and thermal conductivity on the formed thermal insulation plate respectively;
S8: assembling all thermal insulation plates with pads to obtain the thermal insulation device, where each of the pads is disposed between two thermal insulation plates.

9. The preparation method of claim 8, wherein
the metal materials in step S1 have high temperature resistance and low thermal conductivity and are superalloys;
the unit cell topologies in step S2 include body-centered cubic unit cell, regular octahedral unit cell, and regular dodecahedral unit cell;
the compressive properties of the three different unit cell topologies follow an order of regular octahedral unit cell > regular dodecahedral unit cell > body-centered cubic unit cell;
the finite element method in step S3 is performed by Commercial Abaqus finite element software;
the lattice structure of the middle core layer in step S4 has a strut size of 0.5~5mm;
the thickness of upper and lower panels of the sandwich structure of each of the thermal insulation plate is in a range of 10~30mm;
the overall structure of each of the thermal insulation plate in step 6 has an outer outline diameter of φ500~800mm and a thickness of 20~50mm;
in step 7, a synergistic temperature is 400-800°C, a laser power is 1600-2000 W, a scanning speed is 10-14 mm/s, and a powder feeding rate is 5-10 g/min.

10. Application of the thermal insulation plate according to any one of claims 1-3 or the thermal insulation device according to claim 6 or 7 in a vacuum isothermal forging press.
